# EUROPÄISCHE PATENTSCHRIFT

(11) **EP 0 678 491 B1**
(45) Veröffentlichungstag und Bekanntmachung des Hinweises auf die Patenterteilung: **07.07.1999**
(21) Anmeldenummer: 95200298.8
(22) Anmeldetag: 07.02.1995
(51) Int. Cl.: C05F 9/02, B03B 9/06

(54) **Vorrichtung und Verfahren zur Abscheidung von Hart- und Weichstoffen aus kompostiertem Material**
Device and process for the separation of the heavy and light fractions from composted materials
Appareil et procédé pour la séparation des fractions légères et lourdes des matériaux compostés

(30) Priorität: 21.04.1994 DE 4413842
(43) Veröffentlichungstag der Anmeldung: 25.10.1995
(73) Patentinhaber: Metallgesellschaft Aktiengesellschaft, 60325 Frankfurt am Main (DE)
(72) Erfinder: Dolle, Lothar, D-44627 Herne (DE)

(56) Entgegenhaltungen:
- WO-A-91/17835
- DE-A- 3 836 608
- FR-A- 2 577 448
- GB-A- 212 464
- US-A- 2 315 651

## Beschreibung

Die vorliegende Erfindung betrifft eine Vorrichtung zur Abscheidung von Hart- und Weichstoffen aus kompostiertem Material. Die vorliegende Erfindung betrifft weiter ein Verfahren zur Abscheidung von Hart- und Weichstoffen aus kompostiertem Material. Schließlich ist nach der vorliegenden Erfindung die Verwendung der Vorrichtung als mobiler Kompostsichter vorgesehen.

Kompostiertes Material fällt nach einer etwa vierzehntägigen intensiven Kompostierphase und nach einer Nachkompostierphase als sogenannter Fertigkompost an. Der Fertigkompost weist eine mittlere Korngröße von < 25 mm auf. Die Gehalte an Hartstoffen wie z.B. Glas, Keramik und Gestein und an Weichstoffen, wie z.B. Kunststoffe, Gräser und Staub im Fertigkompost übersteigen die Anforderungen der Bundesgütegemeinschaft Kompost e.V. (RAL GZ 251). Die Verunreinigungen setzen die Wirksamkeit des Fertigkompostes als Bodenverbesserer erheblich herab.

Die DE-A-3836608 beschreibt ein Verfahren und eine Vorrichtung, wobei bereits gereifter kompost unmittelbar im Ausschluß an ein Trommelsieb einem Sichtvorgang unterworfen wird.

Die Aufgabe der vorliegenden Erfindung ist es, einen Hart- und Weichstoffabscheider für kompostiertes Material und ein wirtschaftliches und umweltschonendes Verfahren zur Abscheidung von Hart- und Weichstoffen aus kompostiertem Material bereitzustellen.

Die Aufgabe der vorliegenden Erfindung wird durch eine Vorrichtung zur Abscheidung von Hart- und Weichstoffen aus kompostiertem Material gelöst, bestehend aus einem Aufgabetrichter und einer Dosierschnecke, die unterhalb des Aufgabetrichters untergebracht ist und mit einem ersten Förderband in Verbindung steht, wobei das erste Förderband zu einem Hartstoffausleser führt, der Hartstoffausleser einen Ausgang für Hartstoffe aufweist, der Hartstoffausleser über einen Ausgang mit einem zweiten Förderband zum Austragen des von Hart- und Weichstoffen befreiten kompostierten Materials in Verbindung steht, vom Hartstoffausleser eine Leitung zu einem Abscheider führt, vom Abscheider eine Leitung zum Ventilator führt, der Auslauf des Abscheiders mit einem dritten Förderband in Verbindung steht, das dritte Förderband zu einem Foliensieb führt, aus dem Foliensieb Verunreinigungen über einen Ausgang ausgetragen werden und das Foliensieb über eine Öffnung mit dem zweiten Förderband in Verbindung steht. Mit der erfindungsgemäßen Vorrichtung wird ein Fertigkompost erhalten, der weitgehend von Hart- und Weichstoffen befreit ist. Der Fertigkompost erfüllt die Anforderungen der Bundesgütegemeinschaft Kompost e.V. (RAL GZ 251). Die Wirksamkeit des erfindungsgemäß erhaltenen Fertigkompostes als Bodenverbesserer steigt um 50 bis 75 % gegenüber unbehandeltem Fertigkompost.

Eine bevorzugte Ausgestaltung der Erfindung ist eine Vorrichtung, die sich in einem Abrollkipprahmen befindet und mobil ist. Der erfindungsgemäße mobile Kompostsichter ist auf einem Abrollkipprahmen nach DIN 30722 aufgebaut. Durch abnehmbare Rohrleitungen und Abscheideoberteile können beim Transport der Vorrichtung die gesetzlichen Bestimmungen gemäß der in der Bundesrepublik Deutschland geltenden Straßenverkehrsordnung (STVO) eingehalten werden.

Eine bevorzugte Ausgestaltung der Erfindung ist eine Vorrichtung, wobei der Hartstoffausleser ein Sieb, vorzugsweise ein Edelstahlsieb enthält, die Maschengröße des Siebes von 5 mm bis 15 mm einstellbar ist, das Sieb geneigt ist, wobei der Neigungswinkel einstellbar ist, das geneigte Sieb in Schwingung gebracht wird und die Amplitude sowie die Intensität einstellbar sind. Das Material wird auf dem Sieb in eine ballistische Bewegung gebracht. Die Schwerteile (Hartstoffe), die schwerer sind und eine höhere Dichte als die Kompostfraktion haben, werden ballistisch beschleunigt. Sie wandern der Neigungsrichtung entgegen und daher nach oben. Die leichten Teile, d.h. die Kompostfraktion mit geringerer Dichte, die ballistisch nicht beschleunigt werden, rutschen nach unten. Feines Material fällt durch die Maschen des Siebs. Mit dem erfindungsgemäßen Hartstoffausleser werden gute Ergebnisse bei der Abtrennung der Hartstoffe vom wirksamen, kompostierten Material erreicht.

Eine bevorzugte Ausgestaltung der Erfindung ist eine Vorrichtung, wobei das Foliensieb als ein zur Austragungsrichtung konisch zulaufendes Trommelsieb mit einer Maschengröße des Siebs von 1 mm bis 2 mm gestaltet ist. Die Staubfraktion fällt durch die Maschen der Siebtrommel und Reststoffe werden ausgetragen. Mit dem erfindungsgemäßen Foliensieb werden gute Ergebnisse bei der Abtrennung der Weichstoffe vom wirksamen staubförmigen, kompostierten Material erreicht.

Die der vorliegenden Erfindung zugrunde liegende Aufgabe wird weiter gelöst durch ein Verfahren zur Abscheidung von Hart- und Weichstoffen aus kompostiertem Material, wobei
a) das kompostierte Material gleichmäßig dosiert wird,
b) das kompostierte Material in eine Hart- und Weichstoff-Fraktion sowie eine von Hart- und Weichstoffen befreite Kompostfraktion getrennt wird,
c) die Hartstofffraktion gemäß Verfahrensstufe (b) ausgetragen wird,
d) die gemäß Verfahrensstufe (b) von Hart- und Weichstoffen befreite Kompostfraktion ausgetragen wird,
e) die Weichstofffraktion bei der Trennung gemäß Verfahrensstufe (b) abgesaugt und abgeschieden wird,
f) die gemäß Verfahrensstufe (e) abgeschiedene Weichstofffraktion in Weichstoffe und von Weichstoffen befreites, staubförmiges, kompostiertes Material getrennt wird, die Weichstoffe ausgetragen werden und das staubförmige, kompostierte Material mit der Kompostfraktion gemäß Verfahrensstufe (b) vereinigt wird.

Nach dem erfindungsgemäßen Verfahren werden bis zu 98 % der im Kompost vorhandenen Hartstoffe und bis zu 85 % der im Kompost vorhandenen Weichstoffe abgetrennt.

Eine bevorzugte Ausgestaltung der Erfindung ist ein Verfahren, wobei die Hartstofffraktion gemäß Verfahrensstufe (b) mit einer Korngröße von > 0 mm bis 25 mm und einer Dichte von 300 kg/m³ bis 1000 kg/m³, die Weichstofffraktion gemäß Verfahrensstufe (b) mit einer Korngröße von 5 mm bis 25 mm und einer Dichte < 300 kg/m³ und die von Hart- und Weichstoffen befreite Kompostfraktion gemäß Verfahrensstufe (b) mit einer Korngröße von > 0 mm bis 25 mm und einer Dichte von 300 kg/m³ bis 600 kg/m³ abgetrennt werden.
In diesem Korngrößen- und Dichtebereich für die Hart- und Weichstoffe werden 80 % bis 98 % der im Fertigkompost vorhandenen Weich- und Hartstoffe ausgetragen.

Eine bevorzugte Ausgestaltung der Erfindung ist ein Verfahren, wobei die gemäß Verfahrensstufe (e) abgeschiedene Weichstofffraktion bis zu 25 Gew.-% des eingesetzten Materials beträgt. Bei diesen Mengen an abgeschiedenen Weichstoffen werden gute Ergebnisse für die Reinheit des kompostierten Materials erreicht.

Eine bevorzugte Ausgestaltung der Erfindung ist ein Verfahren, wobei die gemäß Verfahrensstufe (b) von Hart- und Weichstoffen befreite Kompostfraktion und gemäß Verfahrensstufe (f) von Weichstoffen befreites, staubförmiges kompostiertes Material bis zu 75 Gew.-% des eingesetzten Materials betragen und einen Gehalt an Hart- und Weichstoffen von < 5 % aufweisen. Die Trennung gemäß Verfahrensstufe (f) ermöglicht die Rückgewinnung von staubförmigem, kompostiertem Material, das aufgrund der kleinen Korngröße und Dichte und der daher gegebenen Flugfähigkeit mit den Weichstoffen gemäß den Verfahrensstufen (b) und (e) abgetrennt, abgesaugt und abgeschieden wird.

Erfindungsgemäß ist die Verwendung der Vorrichtung als mobiler Kompostsichter auf einem Abrollkipprahmen zum Sichten von kompostiertem Material von Hart- und Weichstoffen vorgesehen.

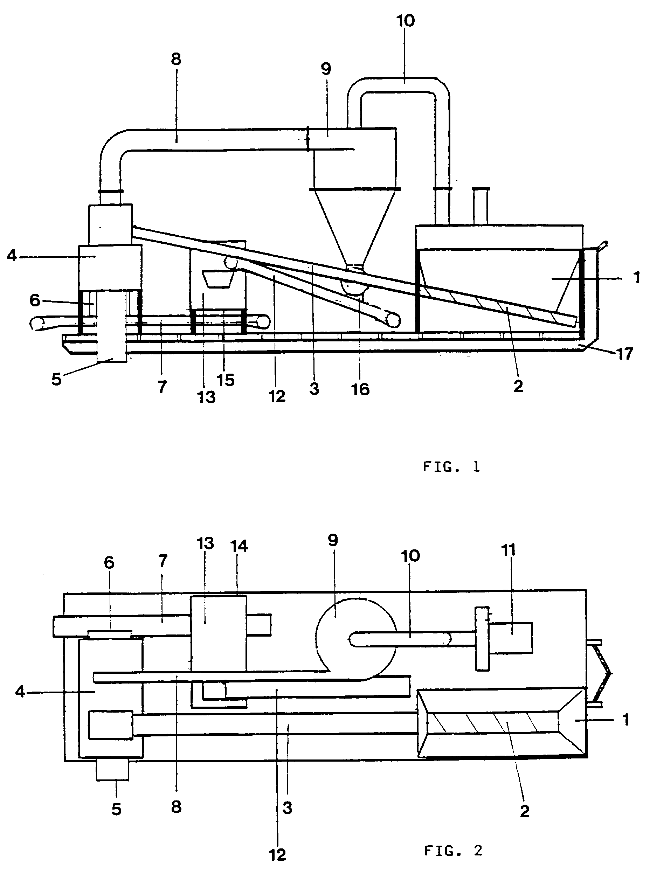

Die Erfindung wird anhand des Beispiels und der Figuren 1 und 2 weiter erläutert.

Es zeigen:
- Fig. 1:: Eine Seitenansicht der erfindungsgemäßen Vorrichtung
- Fig. 2:: Eine Draufsicht auf die erfindungsgemäße Vorrichtung

### Beispiel

2 t Material mit einer Korngröße von < 25 mm aus der Nachrotte wurden in einen Aufgabetrichter (1) gefüllt. Über eine regelbare Dosierschnecke (2) wurde gleichmäßig Material mit 75 Gew.-% kompostierten Materials, 10 Gew.-% Hartstoffen und 15 Gew.-% Weichstoffen auf ein Förderband (3) gegeben. Vom Förderband (3) wurden 2 t kompostierten Materials in einen Hartstoffausleser (4) gegeben. Aus dem Hartstoffausleser (4) wurden seitlich über eine Rutsche (5) 300 kg Hartstoffe (Schwerteile) wie Glas, Keramik und Steine mit einer Korngröße von < 25 mm und einer mittleren Dichte von 800 kg/m³ ausgetragen. Aus dem Hartstoffausleser (4) wurden durch Unterdruck 500 kg Weichstoffe, wie Kunststoffolien, Gräser und Gehölz sowie staubförmiges, kompostiertes Material mit einer Korngröße von < 25 mm und einer mittleren Dichte von 300 kg/m³ als flugfähige Fraktion über die Leitung (8) abgesaugt und im Abscheider (9) gesammelt. Durch den Ventilator (11) wurde im Hartstoffausleser (4) ein mittlerer Unterdruck von 0,25 bar erzeugt. 1,2 t kompostierten Materials, das im Hartstoffausleser (4) von Hart- und Weichstoffen befreit wurde, und eine Korngröße von < 25 mm und eine mittlere Dichte von 400 kg/m³ aufwies, wurden über Ausgang (6) auf ein Förderband (7) geleitet und abgeführt.

Aus dem Auslauf (16) des Abscheiders (9) wurden 500 kg abgesaugten Weichstofffraktion über eine Zellenschleuse (in den Figuren nicht dargestellt) auf das Förderband (12) gegeben. Über das Förderband (12) gelangte die Weichstofffraktion in das Foliensieb (13). Im Foliensieb (13) wurden 300 kg staubförmiges Material mit einer Korngröße von < 5 mm und einer mittleren Dichte von 300 kg/m³ von Weichstoffen getrennt und über einen Ausgang (14) auf das Förderband (7) geleitet. Aus dem Foliensieb (13) wurden 200 kg Weichstoffe mit einer Korngröße > 5 mm bis 25 mm und einer mittleren Dichte von 300 kg/m³ durch die Öffnung (15) ausgetragen. Die aus dem Hartstoffausleser (4) und dem Foliensieb (13) ausgetragenen Fraktionen an kompostiertem Material, die auf dem Förderband (7) vereinigt wurden, enthielten 97 Gew.-% kompostiertes Material und 3 Gew.-% Hart- und Weichstoffe.

## Patentansprüche

1. Vorrichtung zur Abscheidung von Hart- und Weichstoffen aus kompostiertem Material, bestehend aus einem Aufgabetrichter (1) und einer Dosierschnecke (2), die unterhalb des Aufgabetrichters (1) untergebracht ist und mit einem ersten Förderband (3) in Verbindung steht, wobei das erste Förderband (3) zu einem Hartstoffausleser (4) führt, der Hartstoffausleser (4) einen Ausgang (5) für Hartstoffe aufweist, der Hartstoffausleser (4) über einen Ausgang (6) mit einem zweiten Förderband (7) zum Austragen des von Hart- und Weichstoffen befreiten kompostierten Materials in Verbindung steht, vom Hartstoffausleser (4) eine Leitung (8) zu einem Abscheider (9) führt, vom Abscheider (9) eine Leitung (10) zum Ventilator (11) führt, der Auslauf (16) des Abscheiders (9) mit einem dritten Förderband (12) in Verbindung steht, das dritte Förderband (12) zu einem Foliensieb (13) führt, aus dem Foliensieb (13) Verunreinigungen über einen Ausgang (14) ausgetragen werden und das Foliensieb (13) über eine Öffnung (15) mit dem zweiten Förderband (7) in Verbindung steht.

2. Vorrichtung nach Anspruch 1, wobei sich die Vorrichtung in einem Abrollkipprahmen (17) befindet und die Vorrichtung mobil ist.

3. Vorrichtung nach den Ansprüchen 1 oder 2, wobei der Hartstoffausleser (4) ein Sieb, vorzugsweise ein Edelstahlsieb enthält, die Maschengröße des Siebes von 5 mm bis 15 mm einstellbar ist, das Sieb geneigt ist, wobei der Neigungswinkel einstellbar ist, das geneigte Sieb in Schwingung gebracht wird, und die Amplitude sowie die Intensität einstellbar sind.

4. Vorrichtung nach den Ansprüchen 1 bis 3, wobei das Foliensieb (13), als ein zur Austragungsrichtung konisch zulaufendes Trommelsieb mit einer Maschengröße des Siebs von 1 mm bis 2 mm gestaltet ist.

5. Verfahren zur Abscheidung von Hart- und Weichstoffen aus kompostiertem Material, wobei
a) das kompostierte Material gleichmäßig dosiert wird,
b) das kompostierte Material in eine Hart- und Weichstofffraktion sowie eine von Hart- und Weichstoffen befreite Kompostfraktion getrennt wird,
c) die Hartstofffraktion gemäß Verfahrensstufe (b) ausgetragen wird,
d) die gemäß Verfahrensstufe (b) von Hart- und Weichstoffen befreite Kompostfraktion ausgetragen wird,
e) die Weichstofffraktion bei der Trennung gemäß Verfahrensstufe (b) abgesaugt und abgeschieden wird,
f) die gemäß Verfahrensstufe (e) abgeschiedene Weichstofffraktion in Weichstoffe und von Weichstoffen befreites, staubförmiges, kompostiertes Material getrennt wird, die Weichstoffe ausgetragen werden und das staubförmige, kompostierte Material mit der Kompostfraktion gemäß Verfahrensstufe (b) vereinigt wird.

6. Verfahren nach Anspruch 5, wobei die Hartstofffraktion gemäß Verfahrensstufe (b) mit einer Korngröße von > 0 mm bis 25 mm und einer Dichte von 300 kg/m³ bis 1000 kg/m³, die Weichstofffraktion gemäß Verfahrensstufe (b) mit einer Korngröße von 5 mm bis 25 mm und einer Dichte < 300 kg/m³ und die von Hart- und Weichstoffen befreite Kompostfraktion gemäß Verfahrensstufe (b) mit einer Korngröße von > 0 mm bis 25 mm und einer Dichte von 300 kg/m³ bis 600 kg/m³ abgetrennt werden.

7. Verfahren nach den Ansprüchen 5 und 6, wobei die gemäß Verfahrensstufe (e) abgeschiedene Weichstofffraktion bis zu 25 Gew.-% des eingesetzten Materials beträgt.

8. Verfahren nach den Ansprüchen 5 bis 7, wobei gemäß Verfahrensstufe (b) von Hart- und Weichstoffen befreite Kompostfraktion und gemäß Verfahrensstufe (f) von Weichstoffen befreites, staubförmiges kompostiertes Material bis zu 75 Gew.-% des eingesetzten Materials betragen und einen Gehalt an Hart- und Weichstoffen von < 5 % aufweisen.

9. Verwendung einer Vorrichtung gemäß den Ansprüchen 1 bis 4 als mobiler Kompostsichter auf einem Abrollkipprahmen zum Sichten von kompostiertem Material von Hart- und Weichstoffen.

## Claims

1. Apparatus for separating hard and soft matter from composted material, comprising a charging hopper (1) and a metering worm (2), which is accommodated below the charging hopper (1) and is in communication with a first conveyor belt (3), where the first conveyor belt (3) leads to a hard-matter sorter (4), the hard-matter sorter (4) has an outlet (5) for hard matter, the hard-matter sorter (4) is in communication with a second conveyor belt (7) for discharging the composted material liberated from hard and soft matter via an outlet (6), from the hard-matter sorter (4) a line (8) leads to a separator (9), from the separator (9) a line (10) leads to the ventilator (11), the outlet (16) of the separator (9) is in communication with a third conveyor belt (12), the third conveyor belt (12) leads to a film screen (13), from the film screen (13) impurities are discharged via an outlet (14), and the film screen (13) is in communication with the second conveyor belt (7) via an opening (15).

2. The apparatus as claimed in claim 1, wherein the apparatus is mounted in a rolling tilting frame (17), and the apparatus is mobile.

3. The apparatus as claimed in claims 1 or 2, wherein the hard-matter sorter (4) includes a screen, preferably a stainless-steel screen, the mesh size of the screen can be adjusted from 5 mm to 15 mm, the screen is inclined, where the angle of inclination is adjustable, the inclined screen is oscillated, and the amplitude as well as the intensity are adjustable.

4. The apparatus as claimed in claims 1 to 3, wherein the film screen (13) is designed as a drum screen tapered towards the discharge direction with a mesh size of the screen of 1 mm to 2 mm.

5. A process of separating hard and soft matter from composted material, wherein
a) the composted material is metered uniformly,
b) the composted material is separated into a hard and soft matter fraction as well as a compost fraction liberated from hard and soft matter,
c) the hard matter fraction is discharged in accordance with process stage (b),
d) the compost fraction liberated from hard and soft matter in accordance with process stage (b) is discharged,
e) the soft matter fraction is sucked off and separated in the separation in accordance with process stage (b),
f) the soft matter fraction separated in accordance with process stage (e) is separated into soft matter and dust-like composted material liberated from soft matter, the soft matter is discharged, and the dust-like composted material is combined with the compost fraction in accordance with process stage (b).

6. The process as claimed in claim 5, wherein the hard matter fraction in accordance with process stage (b) with a grain size of > 0 mm to 25 mm and a density of 300 kg/m³ to 1000 kg/m³, the soft matter fraction in accordance with process stage (b) with a grain size of 5 mm to 25 mm and a density < 300 kg/m³, and the compost fraction liberated from hard and soft matter in accordance with process stage (b) with a grain size of > 0 mm to 25 mm and a density of 300 kg/m³ to 600 kg/m³ are separated.

7. The process as claimed in claims 5 and 6, wherein the soft matter fraction separated in accordance with process stage (e) represents up to 25 wt-% of the used material.

8. The process as claimed in claims 5 to 7, wherein compost fraction liberated from hard and soft matter in accordance with process stage (b) and dust-like composted material liberated from soft matter in accordance with process stage (f) represent up to 75 wt-% of the used material and have a content of hard and soft matter < 5 %.

9. Use of an apparatus as claimed in claims 1 to 4 as mobile compost classifier on a rolling tilting frame for separating composted material from hard and soft matter.

## Revendications

1. Installation de séparation de matières dures et de matières tendres d'un matériau composté, constituée d'une trémie (1) de chargement et d'une vis (2) doseuse, qui est disposée en-dessous de la trémie (1) de chargement et qui est en liaison avec une première bande (3) convoyeuse, la première bande (3) convoyeuse menant à un extracteur (4) de matières dures, l'extracteur (4) de matières dures ayant une sortie (5) pour des matières dures, l'extracteur (4) de matières dures communiquant par une sortie (6) avec une deuxième bande (7) convoyeuse en vue du déchargement du matériau composté débarrassé des substances dures et tendres, un conduit (8) menant de l'extracteur (4) de matières dures à un séparateur (9), un conduit (10) menant du séparateur (9) au ventilateur (11), la sortie (16) du séparateur (9) étant en liaison avec une troisième bande (12) convoyeuse, la troisième bande (12) convoyeuse menant à un tamis (13) à lamelles, des impuretés étant déchargées du tamis (13) à lamelles par l'intermédiaire d'une sortie (14) et le tamis (13) à lamelles étant en relation par une ouverture (15) avec la deuxième bande (7) convoyeuse.

2. Installation suivant la revendication 1, qui se trouve dans un bâti (17) basculant et l'installation est mobile.

3. Installation suivant les revendications 1 ou 2, l'extracteur (4) de matières dures étant un tamis, de préférence un tamis en acier fin, la dimension des mailles du tamis pouvant être réglée de 5 mm à 15 mm, le tamis est incliné, l'angle d'inclinaison pouvant être réglé, le tamis incliné peut être mis en oscillation et l'amplitude ainsi que l'intensité des oscillations peuvent être réglées.

4. Installation suivant les revendications 1 à 3, dans laquelle le tamis (13) à lamelles est constitué sous la forme d'un tamis à tambour pointant coniquement en direction du déchargement avec une dimension de mailles du tamis de 1 mm à 2 mm.

5. Procédé de séparation de matières dures et de matières tendres d'un matériau composté, qui consiste
a) à amener de manière dosée uniformément le matériau composté,
b) à séparer le matériau composté en une fraction dure et en une fraction tendre, ainsi qu'en une fraction de compost débarrassée de matières dures et de matières tendres,
c) à décharger la fraction de matières dures suivant le stade (b) du procédé,
d) à décharger la fraction de compost débarrassée de matières dures et de matières tendres suivant le stade (b) du procédé,
e) à aspirer et à déposer la fraction de matières tendres lors de la séparation suivant le stade (b) du procédé,
f) à séparer la fraction de matières tendres déposée suivant le stade (e) du procédé en des matières tendres et en du matériau composté pulvérulent exempt de matières tendres, à décharger les matières tendres et à réunir le matériau composté pulvérulent à la fraction de compost suivant le stade (b) du procédé.

6. Procédé suivant la revendication 5, dans lequel la fraction de matières dures suivant le stade (b) du procédé a une granulométrie allant d'une valeur supérieure à 0 mm à 25 mm et une masse volumique allant de 300 kg/m³ à 1000 kg/m³, la fraction de matières tendres suivant le stade (b) du procédé a une granulométrie de 5 mm à 25 mm et une masse volumique inférieure à 300 kg/m³ et la fraction de compost débarrassée de matières dures et de matières tendres suivant le stade (b) du procédé a une granulométrie allant d'une valeur supérieure à 0 mm à 25 mm et une densité de 300 kg/m³ à 600 kg/m³.

7. Procédé suivant les revendications 5 et 6, dans lequel la fraction de matières tendres déposée suivant le stade (e) du procédé représente jusqu'à 25 % en poids du matériau engagé.

8. Procédé suivant les revendications 5 à 7, dans lequel la fraction de compost débarrassée de matières dures et de matières tendres suivant le stade (b) du procédé et le matériau composté pulvérulent débarrassé de matières tendres suivant le stade (f) du procédé représentent jusqu'à 75 % en poids du matériau engagé et ont une teneur en matières dures et en matières tendres inférieure à 5%.

9. Utilisation d'une installation suivant les revendications 1 à 4 comme cribleur mobile de compost sur un bâti basculant pour séparer par criblage des matières dures et des matières tendres d'un matériau composté.
